# EUROPEAN PATENT SPECIFICATION

(11) **EP 0 875 324 B1**
(45) Date of publication and mention of the grant of the patent: **27.09.2006**
(21) Application number: 98303126.1
(22) Date of filing: 23.04.1998
(51) Int. Cl.: B23D 45/06, B27B 5/24, B27B 5/29, B27B 5/32

(54) **Table saw**
Tischsäge
Scie à table

(30) Priority: 29.04.1997 US 44459 P; 11.09.1997 US 58521 P
(43) Date of publication of application: 04.11.1998
(73) Proprietor: Black & Decker Inc., Newark, DE 19711 (US)
(72) Inventor: O'Banion, Michael L., Westminster, Maryland 21158 (US)
(74) Representative: Dlugosz, Anthony Charles

(56) References cited:
- EP-A- 0 235 683
- EP-A- 0 709 155
- EP-A- 0 715 934
- EP-A- 0 813 938
- EP-A- 0 830 912
- US-A- 74 749
- US-A- 2 313 617
- US-A- 2 788 812
- US-A- 2 852 047
- US-A- 3 177 977
- US-A- 3 893 240
- US-A- 4 164 883
- US-A- 4 516 612
- US-A- 4 523 504
- US-A- 4 549 455
- US-A- 4 657 428

## Description

The present invention relates to a machine tool according to the preamble of claim 1. Such a machine tool is known from US-A-2852047

US-A-2852047 discloses a tilting and elevating mechanism for a table saw.

According to the present invention, there is provided a machine tool comprising:
a work table defining a work surface;
an arbor shaft;
a cutting tool rotatingly driven by the arbor shaft and movable with respect to the work table; and
a motor driving the arbor shaft; whereby the arbor shaft has multiple threads.

An embodiment of a table saw will now be described with reference to the accompanying drawings, in which:
Figure 1 is a perspective view of a table saw;
Figure 2 is a cutaway perspective view of the table saw shown in Figure 1;
Figure 3 is a cut-away perspective view similar to Figure 2 with the motor, saw blade and gear case removed to illustrate the angular adjustment mechanism;
Figure 4 is an exploded perspective view of the angular adjustment mechanism shown in Figure 3;
Figure 5 is a side view of the support plate shown in Figures 1-3 with the motor, saw blade and mounting plate included to illustrate the height adjustment mechanism;
Figure 6 is an end view of the height adjustment mechanism shown in Figure 5;
Figure 7 is an exploded perspective view of the pivot quadrants incorporated into the angular adjustment mechanism;
Figure 8 is a schematic cross-sectional view taken through the gear case illustrating the assembly of the gear case to the support plate;
Figure 9 is an exploded perspective view of the height adjustment mechanism shown in Figures 5-6;
Figure 10 is a side view illustrating the arbor locking mechanism in the unlocked position;
Figure 11 is a side view similar to Figure 10 but showing the locking mechanism in the locked position;
Figure 12 is a side view schematically illustrating an adjustment mechanism for the bevel adjustment system; and
Figure 13 is a block diagram of a control circuit for operating a switched reluctance motor that drives the rotatably mounted saw blade.

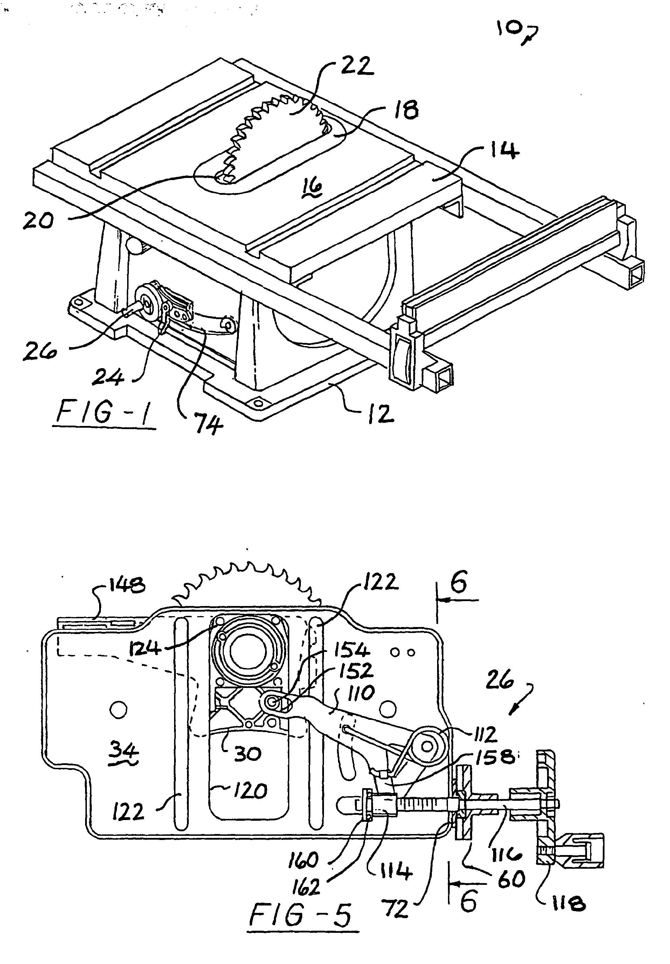

Referring now to the drawings in which like reference numerals designate like or corresponding parts throughout the several views, there is shown in Figure 1 a table saw which is designated generally by the reference numeral 10 incorporating a switched reluctance motor in accordance with the present invention. Table saw 10 comprises a base 12 which supports a generally rectangular work table 14 defining a working surface 16. Work table 14 includes a throat plate 18 which includes an elongated slot 23 through which a circular saw blade 22 protrudes. Saw blade 22 is capable to being adjusted for angularity with respect to working surface 16 by an angular bevel adjustment mechanism 24 as well as being capable for being adjusted for depth of cut by a height adjustment mechanism 26.

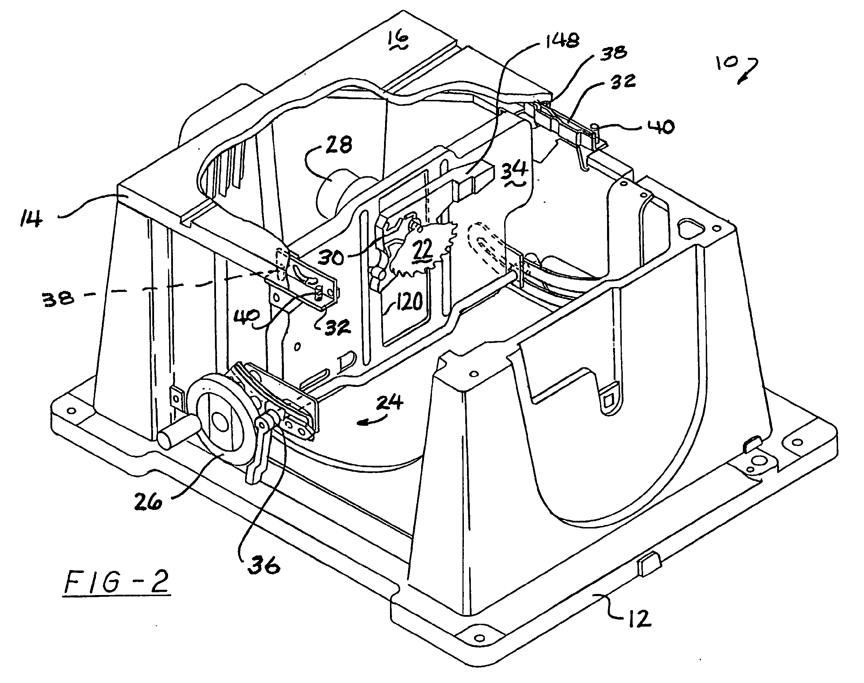

Referring now to Figure 2, table saw 10 is illustrated with working surface 16 of work table 14 partially removed and a portion of base 12 cutaway. Circular saw blade 22 is rotated by a motor 28 which power saw blade 22 through a gear case 30. Bevel adjustment mechanism 24 adjusts the angular position of saw blade 22 by pivoting saw blade 22, motor 28 and gear case 30. Height adjustment mechanism 26 adjusts the cutting depth of saw blade 22 by longitudinal movement of saw blade 22, motor 28 and gear case 30. Persons skilled in the art will recognise that other means for adjusting the height and the bevel of the blade assembly can be achieved using different means. As discussed above, the motor 28 has typically been a universal motor that is connected to a belt or gear reduction drive for driving the rotatably mounted saw blade 22. The present invention employs a switched reluctance motor as the motor 28 in the table saw 10.

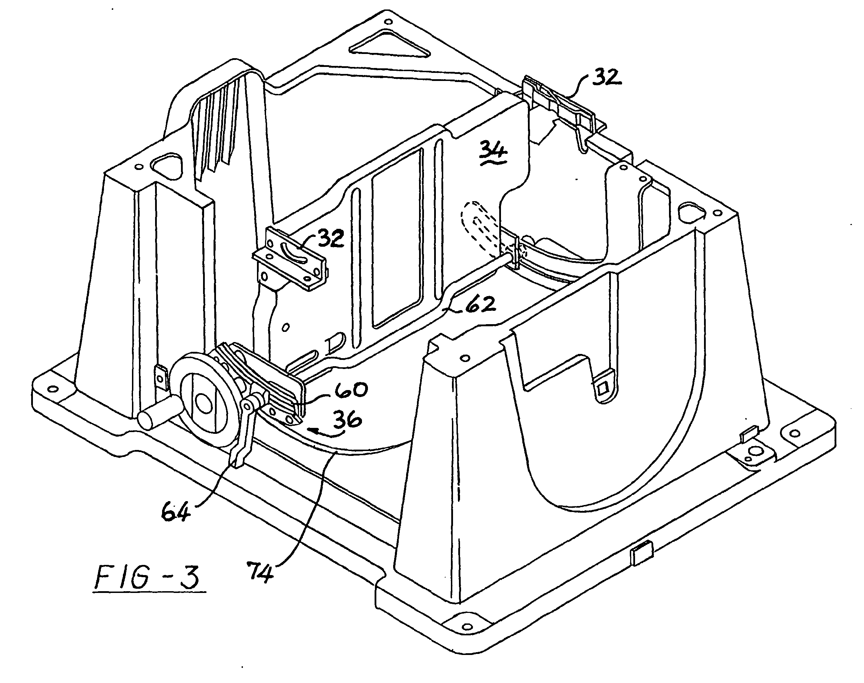

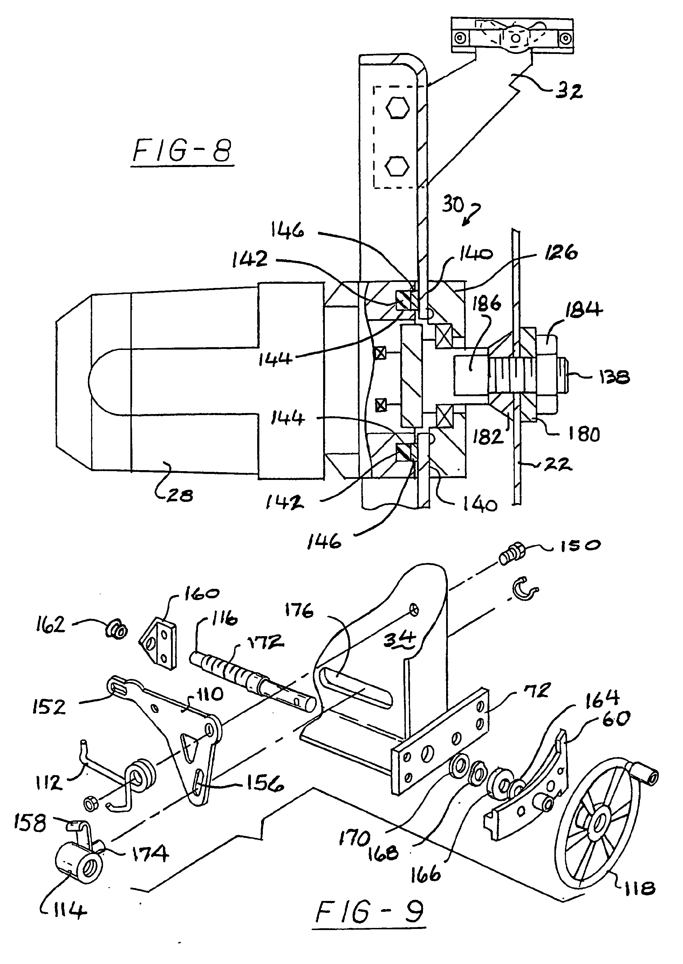

Referring now to Figures 2 and 3, bevel adjustment mechanism 24 comprises a pair of pivot quadrants 32, a support plate 34, and a locking system 36. Each pivot quadrant 32 is attached to a plurality of bosses 38 extending from the bottom of work table 14 using a plurality of bolts 40. Each pivot quadrant 32 is designed to pivot around a centre which is located on working surface 16 of work table 14 coincident with the plane of saw blade 22. Thus, the axis for pivoting support plate 34 lies on working surface 16 and extends through the plane of saw blade 22 when saw blade 22 is generally perpendicular with working surface 16. As shown in Figure 7, pivot quadrant 32 is comprised of a support bracket 42, a pivot bracket 44 and a retaining strap 46. Support bracket 42 is an L-shaped bracket which defines a plurality of holes 48 to facilitate the attachment of pivot quadrant 32 to work table 14 on one leg of the L. The opposite leg of the L defines an arcuate slot 50 which controls the pivotal movement of pivot bracket 44 and locates the centre of the pivoting at working surface 16 of work table 14. Pivot bracket 44 extends between support bracket 42 and support plate 34 and defines a plurality of holes 52 at one end to facilitate the attachment of support plate 34. The opposite end of pivot bracket 44 defines a stamped arcuate protrusion 54 which mates with slot 50 to control the pivoting of pivot bracket 44. Protrusion 54 is formed out of the material of pivot bracket 44 and this forming operation defines an arcuate slot 56 once protrusion 54 has been formed. Retaining strap 46 extends across pivot bracket 44 and is attached to support bracket 42 to maintain the engagement of protrusion 54 with slot 50. Retaining strap 46 defines a formed protrusion 58 which extends into slot 56 to both guide the pivotal movement of pivot bracket 44 and to act as a stop to limit the pivotal movement of pivot bracket 44.

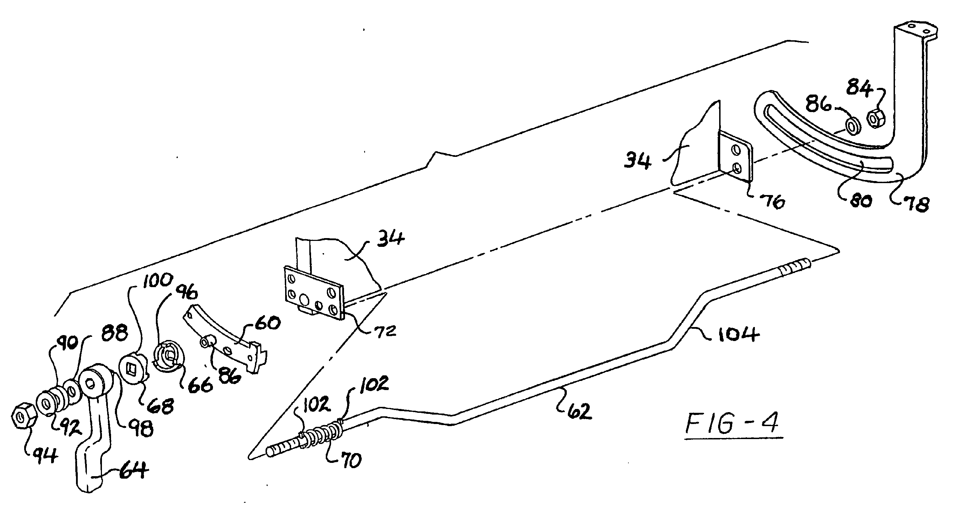

Referring now to Figures 3 and 4, support plate 34 is a shallow drawn plate which is attached to pivot quadrants 32. Support plate 34 is designed to support both height adjustment mechanism 26 and locking system 36. Locking system 36 comprises a bearing block 60, a locking rod 62, a locking arm 64, a bearing block cam 66, a locking arm cam 68 and a return spring 70. Bearing block 60 is a curved member which is attached to a bracket 72 which is in turn attached to support plate 34. Bearing block 60 thus pivots with support plate 34 and bearing block 60 extends through an arcuate slot 74 in the front face of base 12. While the pivotal movement of support plate 34 moves bearing block 60 within slot 74, it should be understood that the movement of support plate 34 is controlled by pivot quadrants 32 and that a clearance will always exist between bearing block 60 and slot 74.

Locking rod 62 extends across support plate 34 and through bracket 72 and bearing block 60 in the front of support plate 34 and through a bracket 76 and a bracket 78 located at the rear of support plate 34. Bracket 76 is attached to support plate 34 and defines an aperture for accepting and guiding locking rod 62. Bracket 78 is attached to work table 14 and it defines an arcuate slot 80 which accepts locking rod 62 and allows for the pivotal movement of support plate 34. While the pivotal movement of support plate 34 moves locking rod 62 within slot 80, it should be understood that the movement of support plate 34 is controlled by pivot quadrants 32 and that a clearance will always exist between locking rod 62 and slot 80. Once locking rod 62 has been inserted through brackets 76 and 78, a washer 82 and a nut 84 are assembled to locking rod 62 to provide adjustment for locking system 34. The front end of locking rod 62 extends through bearing block 60 and through a D-shaped embossment 86 which is an integral part of bearing block 60. Locking arm 64 is assembled over the end of locking rod 62 and secured to locking rod 62 using a hardened washer 88, a thrust bearing 90, a hardened washer 92 and a nut 94 threadingly received on locking rod 62 as shown in Figure 4.

Bearing block cam 66 and locking arm cam 68 are disposed between locking arm 64 and bearing block 60. D-shaped embossment 86 extends from bearing block 60 through slot 74 in the front face of base 12. Bearing block cam 66 includes a D-shaped aperture which mates with embossment 86 and cam 66 is positioned such that the front face of base 12 is sandwiched between bearing block 60 and bearing block cam 66. The engagement of the D-shaped aperture of cam 66 with D-shaped embossment 86 prohibits the rotational movement of cam 66 with respect to bearing block 60. The face of cam 66 opposite to the front surface of base 12 defines a camming surface 96 which reacts with locking arm cam 68 to activate locking system 34.

Locking arm 64 defines a D-shaped embossment 98 which mates with a D-shaped aperture extending through locking arm cam 68 such that locking arm cam 68 pivots with locking arm 64 when locking arm 64 pivots on locking rod 62. The face of cam 68 opposite to locking arm 64 defines a camming surface 100 which mates with camming surface 96 on cam 66 such that pivoting motion of locking arm 64 with respect to locking rod 62 will cause longitudinal movement of locking rod 62 to activate locking system 36. Return spring 70 is disposed on locking rod 62 between an ear 102 formed on locking rod 62 and bearing block 60 in order to urge locking rod 62 towards the rear of base 12 or towards bracket 78. Locking rod 62 is shown with an additional ear 102 on the opposite side of return spring 70 to capture spring 70 in the unassembled condition of locking rod 62. The additional ear 102 requires that the aperture in bearing block 60 which accepts locking rod 62 be provided with a slot (not shown) to accept the additional ear 102. In this arrangement, the engagement of the additional ear 102 with the slot in bearing block 60 will prohibit any rotational movement of locking rod 62.

When camming surface 96 is aligned with camming surface 100, pivoting of support plate 34 and thus saw blade 22 and motor 28 is permitted. The biasing of locking rod 62 towards the rear of base 12 causes embossment 98 to bottom against embossment 86. In this condition, there is a clearance created between camming surface 96 and camming surface 100 as well as a clearance created between bracket 76 and bracket 78. These clearances allow for a smooth pivoting of support plate 34 and thus a smooth angular adjustment for saw blade 22. The pivoting of support plate 34 is controlled by pivot quadrants 32 while bearing block 60 moves within slot 74 in the front face of base 12 and locking rod 62 moves within slot 80 in bracket 78. When the desired angle of saw blade 22 is obtained, locking system 36 is activated by pivoting locking arm 64 on locking rod 62 which rotates cam 68 with respect to cam 66. Camming surface 100 is cammed away from camming surface 96 causing longitudinal movement of locking rod 62. The longitudinal movement of locking rod 62 compresses support plate 34 between bracket 78 and the front face of base 12 due to washer 82 and nut 84 engaging bracket 78 and bearing block cam 66 engaging the front surface of base 12. The flexibility of locking rod 62 due to a centre off-set area 104 and the flexibility of bracket 78 permit the compression of support plate 34. The adjustment for locking system 36 is provided for by nut 84.

Referring now to Figures 2, 5, 6 and 9, height adjustment mechanism 26 comprises a pivot link 110, a biasing spring 112, a follower nut 114, a height adjustment screw 116 and a crank handle 118 which function to move saw blade 22, motor 28 and gear case 30 longitudinally with respect to support plate 34.

Support plate 34 defines a generally rectangular opening 120 within which gear case 30 is located. Located adjacent to and extending generally the entire length of opening 120 are a pair of formed ribs 122 which provide stiffness to support plate 34. Gear case 30 includes a housing 124 disposed on one side of support plate 34 and a cover 126 disposed on the opposite side of support plate 34. Cover 126 is secured to housing 124 by a plurality of bolts 128 such that support plate 34 is sandwiched between cover 126 and housing 124. Gear case 30 includes a pair of longitudinally extending surfaces 130 which engage the opposing sides of opening 120 to guide the movement of gear case 30 within opening 120. Motor 28 is attached to housing 124 and includes an armature shaft 132 having a pinion 134 which meshes with an output gear 136 which is rotatably supported within gear case 30. The output gear includes an arbor shaft 138 which provides for the attachment of saw blade 22. Thus, when motor 28 is powered, armature shaft 132 and pinion 134 rotate which rotates output gear 136 and arbor shaft 138 which in turn rotates saw blade 22.

In the prior art, single thread screws have been used for the arbor shaft 138. However, because of the repeated high loads applied to the blade 22 when cutting, the arbor nut 184 and washers 180 and 182 may be dragged rotationally in a self-tightening direction. This could make removal of the arbor nut 184 difficult. A prior art solution includes using a double "D" to lock washer 180 or washer 182 to the arbor shaft 138 to prevent dragging, and self-tightening, of the arbor nut 184. This solution requires additional hardware parts or additional machining operations, thus raising manufacturing costs.

Accordingly, it is preferable that the arbor shaft 138 have a twin lead thread, or double thread. As such, the angle of the threads relative to a plane perpendicular to the shaft axis, or alpha angle, in the double thread shaft is larger than the alpha angle in the single thread shaft. The larger alpha angle helps reduce the torque applied on the arbor nut 184, diminishing its self-tightening. For example, if the double thread shaft's alpha angle is twice that of a single thread shaft's alpha angle, the torque applied on the double-threaded arbor nut would be about half of the torque applied on the single-threaded arbor nut. Such reduction of torque minimises the arbor nut's self-tightening. Persons skilled in the art will recognise that this result can also be achieved so long as multiple threads, i.e., triple, quadruple, etc., threads, are used on the arbor shaft.

The alpha angle should be at least 3° and preferably in a range between 5° and 5.4°. Such range provides a small screw pitch that prevents a thin blade from falling into the space between the threads. Otherwise, the blade would fall into the space between the threads, making the blade eccentric relative to the shaft, causing excess vibration and poor cut characteristics, especially at the normal operating speeds of about 4000 RPM.

The increased alpha angle solution is also advantageous as it can be implemented with any kind of thread shape. In other words, the thread cross-sectional shape can be triangular (V-shaped), round (arcuate), trapezoidal, square, etc. Preferably, the thread used in the arbor shaft 138 substantially square and is commonly known as the "ACME thread".

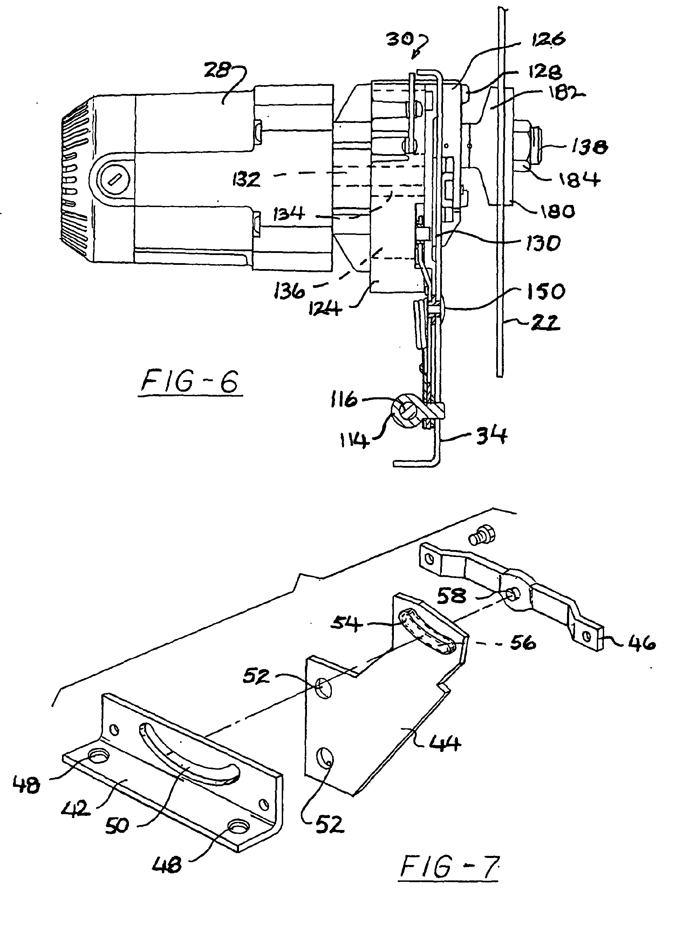

Referring now to Figure 8, the accurate positioning of saw blade 22 is required in order to provide accurate cuts. In order to accurately position saw blade 22, the front face, or the face adjacent saw blade 22, of support plate 34 is defined as a datum face. Cover 126 is provided with a plurality of accurately machines pads 140 which accurately position cover 126 and thus saw blade 22 with respect to support plate 34. Machine pads 140 are biased against the datum face on support plate 34 by a plurality of elastomeric springs 142 each of which is disposed within an aperture 144 defined by housing 124. A low friction wear pad 146 is disposed between each elastomeric spring 142 and support plate 34 to facilitate the movement of gear case 30 within opening 120. Thus, gear case 30, motor 28 and saw blade 22 move longitudinally within opening 120 guided by surfaces 130 with gear case 30 being biased against the datum face of support plate 34 by elastomeric springs 142. As shown in Figures 2 and 5, cover 126 includes an extension 148 which can be utilised for supporting a splitter and/or guard mechanism for table saw 10 if desired The mounting of the splitter and/or guard mechanism on cover 126 allows the components to travel with saw blade 22 during cutting depth and/or angular adjustments.

Referring back to Figures 2, 5, 6 and 9, pivot link 110 is pivotably secured to support plate 34 by an appropriate fastener 150. One arm of pivot link 110 defines a slot 152 which engages a pin 154 attached to gear case 30. The second arm of pivot link 110 defines a slot 156 which engages follower nut 114. Biasing spring 112 is a tension spring positioned around fastener 150 and is disposed between pivot link 110 and a retainer 158. Retainer 158 is attached to follower nut 114 and biasing spring 112 is positioned such that its spring force biases gear case 30 towards a downward position. By biasing pivot link 110 in this direction, the play between the various components of height adjustment mechanism 26 can be eliminated. In addition, the biasing load provided by biasing spring 112 is resisted by follower nut 114 and not by adjustment screw 116 as in many prior art table saws.

Height adjustment screw 116 is rotatably secured at one end by a bracket 160 which is a separate component or bracket 160 can be formed out of support plate 34. A nylon bushing 162 is disposed between screw 116 and bracket 160 to facilitate the rotation of screw 116 and provide a smoothness of operation. The loading and thus the wear between screw 116, bushing 162 and bracket 160 is significantly reduced due to the reaction of spring 112 occurring through follower nut 114 and not through screw 116. The opposite end of adjustment screw 116 extends through and is rotatably supported by bearing block 60. The portion of adjustment screw 116 which extends beyond bearing block 60 is adapted for securing crank handle 118 to adjustment screw 116 such that rotation of crank handle 118 causes rotation of adjustment screw 116. Disposed between bearing block 60 and bracket 72 of support plate 34 is a hardened washer 164, a powdered metal washer 166, a spring thrust washer 168 and a hardened washer 170. Powdered metal washer 166 is secured to adjustment screw 116 by press fitting or other means known in the art. The biasing of spring thrust washer 168 produces frictional resistance to the rotation of adjustment screw 116 allowing for the accurate positioning of saw blade 22 and the ability of height adjustment mechanism 26 to maintain the position of saw blade 22 during the cutting operation. The frictional resistance or drag produced by spring thrust washer 168 maintains the position of adjustment screw 116 and is not affected by the vibration produced by motor 28 and/or the cutting operation. In addition, the biasing produced by spring thrust washer 168 removes any play which may exist between the various components of height adjustment 26.

Follower nut 114 is threadingly received on a threaded portion 172 of screw 116 which is located between bracket 160 and bearing block 60. Follower nut 114 includes a cylindrical finger 174 which extends into retainer 158, into slot 156 of pivot link 110 and into a slot 176 located in support plate 34 to cause the pivoting of pivot link 110 by follower nut 114. Slot 176 in support plate 34 prohibits rotation of follower nut 114 and tends to guide follower nut 114 as it moves along screw 116. In addition, the contact between finger 174 and the edge of slot 176 provides the reaction point for spring 112. Thus, when crank handle 118 is rotated, adjustment screw 116 is rotated which causes follower nut 114 to move longitudinally along threaded portion 172 of adjustment screw 116. The direction of movement of follower nut 114 will be determined by the design of threaded portion 172 and the direction of rotation of crank handle 118. The longitudinal movement of follower nut 114 causes pivotal movement of pivot link 110 due to the engagement of finger 174 which engages slot 156. The pivotal movement of pivot link 110 causes the longitudinal movement of gear case 30, motor 28 and saw blade 22 due to the engagement of slot 152 with pin 154. The longitudinal movement of gear case 30, motor 28 and saw blade 22 sets the height of saw blade 22 extending through work table 14 and thus the depth of cut.

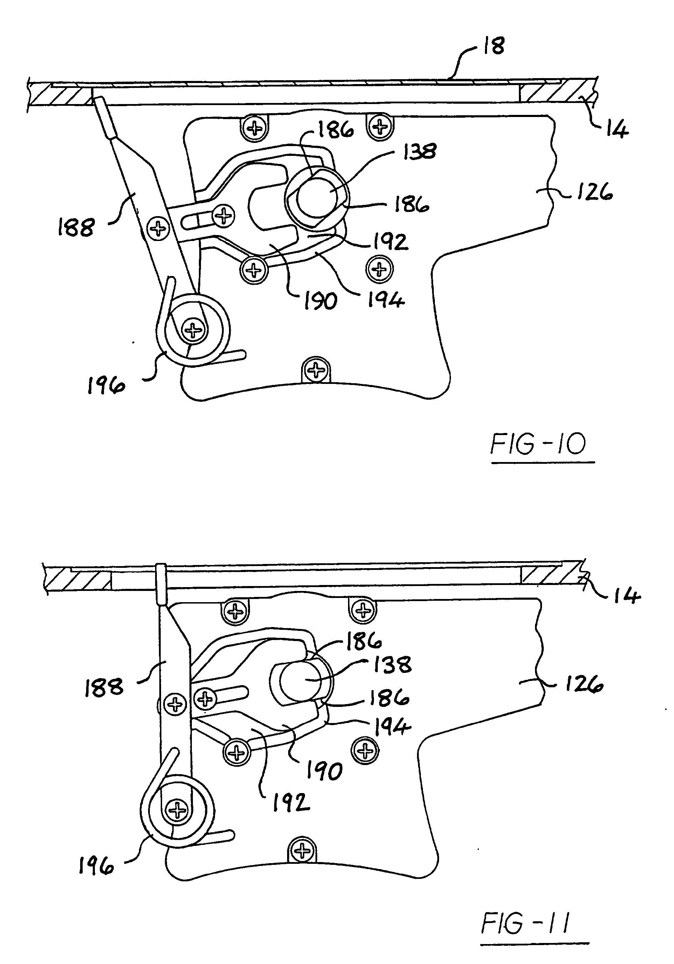

Referring to Figures 8, 10 and 11, cover 126 of gear case 30 supports another unique feature for machine tool 10. One of the problems associated with machine tools is the changing of the cutting tool. Saw blade 22 is assembled to arbor shaft 138 and is frictionally held in position by a pair of washers 180, 182 and an arbor nut 184. Arbor shaft 138 includes a pair of flats 186 which accept a wrench (not shown) in order to stop arbor shaft 138 from rotating when arbor nut 184 is to be loosened or tightened during the changing of saw blade 22. The wrench for engaging flats 186 is normally a separate piece which is easily misplaced which then leads to the wedging of a block of wood or other material against saw blade 22 to hold arbor shaft 138. The wedging of the block against saw blade 22 is both dangerous and leads to unnecessary loading of the bearings supporting arbor shaft 138. The present invention includes a lever 188 which is pivotably secured to cover 126. A wrench 190 is pivotably secured to lever 188 and moves within a pocket 192 formed by a ridge 194 which is an integral part of cover 126 between an unlocked position shown in Figure 10 and a locked position shown in Figure 11. A spring 196 biases wrench 190 into its unlocked position.

The unlocked position of wrench 190 is shown in Figure 10 where wrench 190 is disconnected from flats 186 and arbor shaft 138 is free to rotate. The locked position is shown in Figure 11 where wrench 190 engages flats 186 to prohibit rotation of arbor shaft 138. The end of wrench 190 engages ridge 194 at both the front of wrench 190 adjacent arbor shaft 138 to provide support for wrench 190 in the locked position and at the rear of wrench 190 adjacent to lever 188 to provide support to counteract the torque being allied to arbor nut 184. Lever 188 is accessible to the operator of table saw 10 through the opening in work table 14 which accepts throat plate 18. Lever 188 is designed to extend into the throat plate opening of work table 14 when wrench 190 is in the locked position and saw blade 22 is in its full upward position as shown in Figure 11 to prohibit the assembly of throat plate 18 with work table 14 while wrench 190 is in the locked position. Once wrench 190 is moved to its unlocked position, lever 188 will be removed from the throat plate opening in work table 14 and throat plate 18 can be assembled to work table 14.

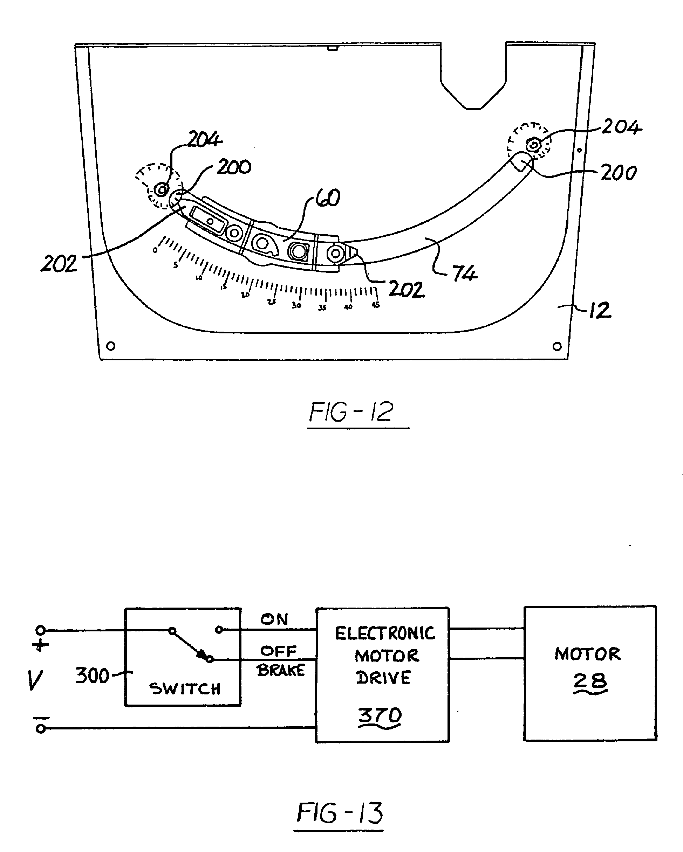

Figure 12 illustrates a bevel angle stop system for bevel adjustment mechanism 24. An adjustment cam 200 is attached to the front panel of work table 14 at opposite ends of slot 74. A protrusion 202 is formed at both ends of bearing block 60. When saw blade 22 is positioned at a point perpendicular to working surface 16, adjustment cam 200 at the zero degree position is rotated until it contacts the zero degree protrusion 202 on bearing block 60. Adjustment cam 200 is tightened in position using a bolt 204 to set the zero degree position of saw blade 22. The tightening of bolt 204 has a tendency to rotate cam 200 in a clockwise direction. The rotation of cam 200 in a clockwise direction urges cam 200 into contact with protrusion 202 due to the external spiral shape of cam 200 to provide an accurate positioning of the bevel angle for saw blade 22. The perpendicularity of saw blade 22 can be set by a square or other means known well in the art. In a similar manner, the 45o position of saw blade 22 with respect to working surface 16 can be set by a similar adjustment and locking of adjustment cam 200 located on the opposite side of slot 74.

As shown in Figure 13, a schematic control circuit is illustrated showing the switched reluctance motor 28 electrically connected to the electronic motor drive 29 and operated by the switch 300 in the base 12 of the table saw 10. Switched reluctance motors rely upon semiconductor switches and complex logic for operation. Such motors are also capable of braking, again relying upon those same semiconductor switches and logic.

As in prior art table saws, the switch 300 may include first and second contacts. Thus, upon depression of the switch 300, the switched reluctance motor 28 is energised to drive the rotatably mounted saw blade 22. Upon release of the switch 300, the second contact can be electrically connected to the electronic motor drive 370 to brake the switched reluctance motor 28. This will be similar to the present practice. However, unlike the universal motors, switched reluctance motors can be controlled to provide braking down to near zero speed, thus reducing total stopping time.

Alternatively, the electronic motor drive 370 can be configured to sense that the switch 300 is open, in other words, released, and then automatically brake the switched reluctance motor 28. Thus, the electronic motor drive 370 can be configured in any desired manner to work in conjunction with the switch 30 to brake the switched reluctance motor 28.

Other variations are possible including the addition of a variable speed control to the switched reluctance motor 28. Another variation can include a soft start, i.e., relatively slow ramp up of motor speed, in the electronic motor drive 370 in order to reduce the strain on a gear reduction drive as well as reduce the starting in rush current to the switched reluctance motor 28. This is an advantage when long extension cords are used.

From the foregoing, it will now be appreciated that the table saw with switched reluctance motor eliminates wear and tear on brushes and commutators as in prior art universal motors as well as regenerative or dynamic braking associated with the universal motor. Wear and tear is substantially eliminated because switched reluctance motors rely upon semiconductor switches and complex logic to operate. Because switched reluctance motors are capable of braking, as a result of the semiconductor switches and logic, they can be controlled to provide braking down to near zero speed, thus reducing the total stopping time.

## Claims

1. A machine tool comprising:
a work table (14) defining a work surface (16);
an arbor shaft (138);
a cutting tool (22) rotatingly driven by the arbor shaft (138) and movable with respect to the work table (14); and
a motor (28) driving the arbor shaft (138); **characterised in that** the arbor shaft has multiple threads.

2. A machine tool according to claim 1, **characterised in that** the arbor shaft (138) has a double thread.

3. A machine tool according to claim 1 or 2, further comprising a switched reluctance motor (28) driving the cutting tool (22).

4. A machine tool according to any one of the preceding claims, **characterised in that** it further comprises:
a mechanism for positioning the cutting tool (22) relative to the working surface (16) of the work table (14), the mechanism comprising:
a support plate (34) pivotably secured to the work table (14), the cutting tool (22) being mounted to the support plate (34) to move between a first position where the cutting tool (22) extends through an aperture (23) in the work table (14) and a second position where the cutting tool (22) is positioned below the working surface (16);
a cutting tool (22) angulating mechanism mounted to the support plate (34), the angulating mechanism being operable to pivot the support plate (34) with respect to the work table (14) such that the cutting tool (22) angulates with respect to said working surface (16); and
a cutting tool elevating mechanism (26) mounted to the support plate (34), the elevating mechanism being operable to move the cutting tool (22) between the first and second positions.

5. A machine tool according to claim 4, **characterised in that** the support plate (34) pivots about an axis which is located on the working surface (16).

6. A machine tool according to claim 4, **characterised in that** it further comprises at least one pivot quadrant (32) for pivotably securing the support plate (34) to the work table (14).

7. A machine tool according to claim 6, **characterised in that** the pivot quadrant (32) comprises:
a support bracket (42) attached to the work table (14);
a pivot bracket (44) pivotably attached to the support bracket (42) and fixably attached to the support plate (34); and
a retaining strap (46) attached to the support bracket (42), the retaining strap (46) engaging the pivot bracket (44) to maintain attachment of the pivot bracket (44) to the support bracket (142).

8. A machine tool according to any of claims 4 to 7, **characterised in that** the angulating mechanism (36) comprises:
a locking rod (62) extending between a front side and a rear side of the support plate (34);
a bracket (72) attached to the work table (14) and positioned adjacent to the rear side of the support plate (34), the locking rod (62) extending through the bracket (72);
a locking arm (64) attached to the locking rod (62) and movable between a first position and a second position, the support plate (34) being free to pivot relative to the work table (14) when the locking arm (64) is in said first position, the support plate (34) being compressed between the bracket (72) and the work table (14) to prohibit pivoting of the support plate (34) when the locking arm (62) is in the second position.

9. A machine tool according to claim 8, **characterised in that** it further comprises a bearing block cam (66) attached to the support plate (34) and a locking arm cam (68) attached to the locking arm (64), the locking arm cam (68) cooperating with the bearing block cam (66) when the locking arm (64) is moved from the first position to the second position to compress the support plate (34).

10. A machine tool according to claim 9, **characterised in that** it further comprises a biasing member (70) disposed between the support plate (34) and the locking arm (62), the biasing member (70) urging the locking arm (62) in a direction which urges the locking arm (62) into contact with the support plate (34) to create a clearance between the bearing block cam (66) and the locking arm cam (68) and to create a clearance between the bracket (72) and the support plate (34).

11. A machine tool according to any of claims 4 to 8, **characterised in that** the work table (14) includes at least one adjustable stop, the adjustable stop including a cam (200) rotatably secured to the work table (14), the cam (200) being selectively locked to the work table (14) in a plurality of positions adjustably to limit the pivoting of the support plate (34).

12. A machine tool according to claim 4 **characterised in that** the elevating mechanism (26) comprises:
an adjustment screw (116) rotatably secured to the support plate (34);
an adjustment nut (114) threadably engaging the adjustment screw (116) such that rotation of the adjustment screw (116) operates to move the adjustment nut (114) longitudinally along the adjustment screw (116); and
a pivot link (110) pivotably secured to the support plate (34), the pivot link (110) extending between the adjustment nut (114) and the cutting tool (22) such that rotation of the adjustment screw (116) operates to pivot the pivot link (110) to move the cutting tool (22) between the first and second positions.

13. A machine tool according to claim 12, **characterised in that** it further comprises a biasing member (112) for urging the cutting tool (22) into one of the first and second positions.

14. A machine tool according to claim 12, **characterised in that** it further comprises means for resisting rotation of the adjustment screw (116).

15. A machine tool according to claim 14, **characterised in that** the means for resisting comprises a washer (164) attached to the adjustment screw (116) and a biasing member (168) for urging the washer (164) against said support plate (34) to provide frictional resistance to rotation of the adjustment screw (116).

16. A machine tool according to any of claims 4 to 15, **characterised in that** the cutting tool (22) comprises:
a gear case (30) mounted to the support plate (34);
a motor (28) attached to one end of the gear case (30);
an arbor shaft (138) rotatably secured to a second end of the gear case (30); and
a cutting device (22) attached to said arbor shaft (138).

17. A machine tool according to claim 16, **characterised in that** the gear case (30) is biased against a face of the support plate (34).

18. A machine tool according to claim 16, further **characterised in that** it comprises:
a lever (188) pivotably attached to the gear case (30) and movable between a first position and a second position;
a wrench (190) pivotably attached to the lever (188), the wrench (190) adapted to engage the arbor shaft (138) to prevent its rotation with respect to the gear case (30) when the lever is in the first position, the arbor shaft (138) being free to rotate when the lever (188) is in the second position.

19. A machine tool according to claim 18, **characterised in that** the work table (14) includes a throat plate (18) disposed within a cavity defined by the work table (14) and extending through the work surface (16), the throat plate (18) defining the aperture (23) in the work table (14), the throat plate (18) being prevented from being properly disposed within the cavity when the lever (188) is in the first position.

20. A machine tool according to any of claims 4 to 19, **characterised in that** the cutting tool (22) is biased against a face of the support plate (34).

## Patentansprüche

1. Werkzeugmaschine mit
einem eine Arbeitsfläche (16) bildenden Arbeitstisch (14),
einer Aufnahmewelle (138),
einem von der Aufnahmewelle (138) drehend angetriebenen und bezüglich dem Arbeitstisch (14) bewegbaren Schneidwerkzeug (22) und
einem die Aufnahmewelle (138) antreibenden Motor (28),
**dadurch gekennzeichnet, dass** die Aufnahmewelle mehrere Gewinde hat.

2. Werkzeugmaschine nach Anspruch 1, **dadurch gekennzeichnet, dass** die Aufnahmewelle (138) ein Doppelgewinde hat.

3. Werkzeugmaschine nach Anspruch 1 oder 2, ferner mit einem das Schneidwerkzeug (22) antreibenden, geschalteten Reluktanzmotor (28).

4. Werkzeugmaschine nach einem der vorhergehenden Ansprüche, **dadurch gekennzeichnet, dass** sie ferner
einen Mechanismus zum Positionieren des Schneidwerkzeugs (22) bezüglich der Arbeitsfläche (16) des Arbeitstisches (14) aufweist, der
eine schwenkbar am Arbeitstisch (14) befestigte Stützplatte (34), an der das Schneidwerkzeug (22) befestigt ist, um sich zwischen einer ersten Stellung, in der das Schneidwerkzeug (22) sich durch eine Öffnung (23) im Arbeitstisch (14) erstreckt, und einer zweiten Stellung bewegbar ist, in der das Schneidwerkzeug (22) sich unterhalb der Arbeitsfläche (16) befindet,
einen an der Stützplatte (34) befestigten Schneidwerkzeug-Neigungsmechanismus, der zum Schwenken der Stützplatte (34) bezüglich dem Arbeitstisch (14) betätigbar ist, so dass sich das Schneidwerkzeug (22) bezüglich der Arbeitsfläche (16) neigt, und
einen an der Stützplatte (34) befestigten Schneidwerkzeug-Hebemechanismus (26) aufweist, der zur Bewegung des Schneidwerkzeugs (22) zwischen den ersten und zweiten Stellungen betätigbar ist.

5. Werkzeugmaschine nach Anspruch 4, **dadurch gekennzeichnet, dass** die Stützplatte (34) um eine Achse schwenkt, die sich auf der Arbeitsfläche (16) befindet.

6. Werkzeugmaschine nach Anspruch 4, **dadurch gekennzeichnet, dass** sie ferner mindestens einen Schwenkquadranten (32) zur schwenkbaren Befestigung der Stützplatte (34) am Arbeitstisch (4) aufweist.

7. Werkzeugmaschine nach Anspruch 6, **dadurch gekennzeichnet, dass** der Schwenkquadrant (32)
einen am Arbeitstisch (14) angebrachten Stützbügel (42),
einen schwenkbar am Stützbügel (42) und fest an der Stützplatte (34) angebrachten Schwenkbügel (44) und
einen am Stützbügel (42) angebrachten Haltestreifen (46) aufweist, der in Eingriff mit dem Schwenkbügel (44) steht, um die Anbringung des Schwenkbügels (44) am Stützbügel (142) aufrecht zu erhalten.

8. Werkzeugmaschine nach einem der Ansprüche 4 bis 7, **dadurch gekennzeichnet, dass** der Neigungsmechanismus (36)
eine sich zwischen einer vorderen Seite und einer hinteren Seite der Stützplatte (34) erstreckende Stützstange (62),
einen am Arbeitstisch (14) angebrachte und sich benachbart zur hinteren Seite der Stützplatte (34)
befindenden Bügel (72), durch den sich die Verriegelungsstange (62) erstreckt,
und einen an der Verriegelungsstange (62) angebrachten und zwischen einer ersten Stellung und einer zweiten Stellung bewegbaren Verriegelungsarm (64) aufweist, wobei die Stützplatte (34) frei bezüglich dem Arbeitstisch (14) schwenken kann, wenn sich der Verriegelungsarm (64) in seiner ersten Stellung befindet, und die Stützplatte (34) zur Verhinderung des Verschwenkens zwischen Bügel (72) und Arbeitstisch (14) zusammengedrückt ist, wenn sich der Verriegelungsarm (62) in der zweiten Stellung befindet.

9. Werkzeugmaschine nach Anspruch 8, **dadurch gekennzeichnet, dass** sie ferner einen an der Stützplatte (34) angebrachten Lagerblocknocken (66) und einen am Verriegelungsarm (64) angebrachten Verriegelungsarmnocken (68) aufweist, der mit dem Lagerblocknocken (66) zusammenwirkt, wenn der Verriegelungsarm (64) zum Zusammendrücken der Stützplatte (34) von der ersten Stellung in die zweite Stellung bewegt wird.

10. Werkzeugmaschine nach Anspruch 9, **dadurch gekennzeichnet, dass** sie ferner ein zwischen der Stützplatte (34) und dem Verriegelungsarm (62) angeordnetes Vorspannelement (70) aufweist, das den Verriegelungsarm (62) in eine Richtung drückt, die den Verriegelungsarm (62) in Berührung mit der Stützplatte (34) drückt, um zwischen dem Lagerblocknocken (66) und dem Verriegelungsarmnocken (68) einen Freiraum zu erzeugen und zwischen dem Bügel (72) und der Stützplatte (34) einen Freiraum zu erzeugen.

11. Werkzeugmaschine nach einem der Ansprüche 4 bis 8, **dadurch gekennzeichnet, dass** der Arbeitstisch (14) mindestens einen einstellbaren Anschlag hat, der einen drehbar am Arbeitstisch (14) befestigten Nocken (200) hat, der wahlweise in einer von mehreren Stellungen einstellbar am Arbeitstisch (14) verriegelt werden kann, um die Verschwenkung der Stützplatte (34) zu begrenzen.

12. Werkzeugmaschine nach Anspruch 4, **dadurch gekennzeichnet, dass** der Hebemechanismus (26)
eine drehbar an der Stützplatte (34) befestigte Einstellschraube (116),
eine derart in Eingriff mit der Einstellschraube (116) stehende Einstellmutter (114), dass die Drehung der Einstellschraube (116) die Bewegung der Einstellmutter (114) in Längsrichtung entlang der Einstellschraube (116) bewirkt, und
ein schwenkbar an der Stützplatte (34) befestigtes Schwenkglied (110) aufweist, das sich zwischen der Einstellmutter (114) und dem Schneidwerkzeug (22) erstreckt, so dass eine Drehung der Einstellschraube (116) das Verschwenken des Schwenkgliedes (110) verursacht, um das Schneidwerkzeug (22) zwischen den ersten und zweiten Stellungen zu bewegen.

13. Werkzeugmaschine nach Anspruch 12, **dadurch gekennzeichnet, dass** sie ferner ein Vorspannelement (112) zum Drücken des Schneidwerkzeugs (22) in eine der ersten und zweiten Stellungen aufweist.

14. Werkzeugmaschine nach Anspruch 12, **dadurch gekennzeichnet, dass** sie ferner Mittel zum Widerstehen einer Drehung der Einstellmutter (116) aufweist.

15. Werkzeugmaschine nach Anspruch 14, **dadurch gekennzeichnet, dass** die Mittel zum Widerstehen eine an der Einstellmutter (116) angebrachte Scheibe (164) und ein die Scheibe (164) zur Erzeugung eines Reibwiderstandes gegen die Drehung der Einstellschraube (116) gegen die Stützplatte (34) drückendes Vorspannelement (168) aufweist.

16. Werkzeugmaschine nach einem der Ansprüche 4 bis 15, **dadurch gekennzeichnet, dass** das Schneidwerkzeug (20)
ein an der Stützplatte (34) befestigtes Getriebegehäuse (30),
einen an einem Ende des Getriebegehäuses (30) angebrachten Motor (28),
eine drehbar an einem zweiten Ende des Getriebegehäuses (30) befestigte Aufnahmewelle (138) und
eine an der Aufnahmewelle (138) angebrachte Schneideinrichtung (22) aufweist.

17. Werkzeugmaschine nach Anspruch 16, **dadurch gekennzeichnet, dass** das Getriebegehäuse (30) gegen eine Fläche der Stützplatte (34) vorgespannt ist.

18. Werkzeugmaschine nach Anspruch 16, ferner **dadurch gekennzeichnet, dass** sie
einen schwenkbar am Getriebegehäuse (30) angebrachten und zwischen einer ersten Stellung und einer zweiten Stellung bewegbaren Hebel (188) und
einen schwenkbar am Hebel (188) angebrachten Schlüssel (190) aufweist, der zum Eingriff mit der Aufnahmewelle (138) angepasst ist, um deren Drehung bezüglich dem Getriebegehäuse (30) zu verhindern, wenn sich der Hebel in der ersten Stellung befindet, während sich die Aufnahmewelle (183) drehen kann, wenn sich der Hebel (188) in der zweiten Stellung befindet.

19. Werkzeugmaschine nach Anspruch 18, **dadurch gekennzeichnet, dass** der Arbeitstisch (14) eine in einem Hohlraum des Arbeitstisches (14) gebildete und sich durch die Arbeitsfläche (16) erstreckende Halsplatte (18) hat, die im Arbeitstisch (14) eine Öffnung (23) bildet und die nicht richtig im Hohlraum angeordnet werden kann, wenn sich der Hebel (188) in der ersten Stellung befindet.

20. Werkzeugmaschine nach einem der Ansprüche 4 bis 19, **dadurch gekennzeichnet, dass** das Schneidwerkzeug (22) gegen eine Fläche der Stützplatte (34) vorgespannt ist.

## Revendications

1. Machine-outil comprenant :
■ une table de travail (14) définissant une surface de travail (16) ;
■ un arbre (138) ;
■ un outil de coupe (22) entraîné en rotation par l'arbre (138) et pouvant se déplacer par rapport à la table de travail (14) ; et
■ un moteur (28) entraînant l'arbre (138) ;
**caractérisée en ce que** l'arbre présente des filetages multiples.

2. Machine-outil selon la revendication 1, **caractérisée en ce que** l'arbre (138) a un filetage double.

3. Machine-outil selon la revendication 1 ou 2, comprenant en outre un moteur à réluctance variable (28) entraînant l'outil de coupe (22).

4. Machine-outil selon l'une quelconque des revendications précédentes, **caractérisée en ce qu'**elle comprend en outre :
■ un mécanisme de positionnement de l'outil de coupe (22) par rapport à la surface de travail (16) de la table de travail (14), le mécanisme comprenant :
■ une plaque de support (34) fixée de manière pivotante à la table de travail (14), l'outil de coupe (22) étant monté sur la plaque de support (34) pour pouvoir passer d'une première position dans laquelle l'outil de coupe (22) se prolonge à travers une ouverture (23) de la table de travail (14) à une seconde position dans laquelle l'outil de coupe (22) est situé en dessous de la surface de travail (16) ;
■ un mécanisme d'inclinaison de l'outil de coupe (22), monté sur la plaque de support (34), le mécanisme d'inclinaison ayant pour fonction de faire pivoter la plaque de support (34) par rapport à la table de travail (14) de sorte que l'outil de coupe (22) soit incliné par rapport à la surface de travail (16) ; et
■ un mécanisme d'élévation (26) de l'outil de coupe, monté sur la plaque de support (34), le mécanisme d'élévation ayant pour fonction de faire passer l'outil de coupe (22) d'une première position à une seconde position.

5. Machine-outil selon la revendication 4, **caractérisée en ce que** la plaque de support (34) pivote autour d'un axe qui est situé sur la surface de travail (16).

6. Machine-outil selon la revendication 4, **caractérisée en ce qu'**elle comprend en outre au moins un segment de pivotement (32) permettant de fixer de manière pivotante la plaque de support (34) à la table de travail (14).

7. Machine-outil selon la revendication 6, **caractérisée en ce que** le segment de pivotement (32) comprend :
■ une console de support (42) fixée à la table de travail (14) ;
■ un support pivotant (44) fixée de manière pivotante à la console de support (42) et relié de manière fixe à la plaque de support (34) ; et
■ une attache de retenue (46) fixée à la console de support (42), l'attache de retenue (46) venant en prise avec le support pivotant (44) pour maintenir la fixation du support pivotant (44) à la console de support (42).

8. Machine-outil selon l'une quelconque des revendications 4 à 7, **caractérisée en ce que** le mécanisme d'inclinaison (36) comprend :
■ une tige de verrouillage (62) s'étendant entre une face frontale et une face arrière de la plaque de support (34) ;
■ un support (72) fixé à la table de travail (14) et étant adjacent à la face arrière de la plaque de support (34), la tige de verrouillage (62) se prolongeant à travers le support (72) ;
■ un bras de verrouillage (64) fixé à la tige de verrouillage (62) et pouvant passer d'une première position à une seconde position, la plaque de support (34) pouvant pivoter librement par rapport à la table de travail (14) lorsque le bras de verrouillage (64) est dans ladite première position, la plaque de support (34) étant comprimée entre le support (72) et la table de travail (14) pour empêcher le pivotement de la plaque de support (34) lorsque le bras de verrouillage (62) est dans la seconde position.

9. Machine-outil selon la revendication 8,
**caractérisée en ce qu'**elle comprend en outre une came (66) de corps de palier fixée à la plaque de support (34) et une came (68) de bras de verrouillage fixée au bras de verrouillage (64), la came (68) de bras de verrouillage coopérant avec la came (66) de corps de palier lorsque le bras de verrouillage (64) passe de la première position à la seconde position pour comprimer la plaque de support (34).

10. Machine-outil selon la revendication 9,
**caractérisée en ce qu'**elle comprend en outre un élément de sollicitation (70) disposé entre la plaque de support (34) et le bras de verrouillage (62), l'élément de sollicitation (70) forçant le bras de verrouillage (62) dans une direction qui force le bras de verrouillage (62) à venir en contact avec la plaque de support (34) pour créer un espace libre entre la came (66) de corps de palier et la came (68) de bras de verrouillage et pour créer un espace libre entre le support (72) et la plaque de support (34).

11. Machine-outil selon l'une quelconque des revendications 4 à 8, **caractérisée en ce que** la table de travail (14) comprend au moins une butée ajustable, la butée ajustable comprenant une came (200) fixée de manière rotative à la table de travail (14), la came (200) étant verrouillée de manière sélective à la table de travail (14) en une pluralité de positions de manière ajustable pour limiter le pivotement de la plaque de support (34).

12. Machine-outil selon la revendication 4, **caractérisée en ce que** le mécanisme d'élévation (26) comprend :
■ une vis de réglage (116) fixée de manière rotative à la plaque de support (34) ;
■ un écrou de réglage (114) en prise par filetage avec la vis de réglage (116) de sorte que la rotation de la vis de réglage (116) entraîne un déplacement de l'écrou de réglage (114) longitudinalement le long de la vis de réglage (116) ; et
■ une jointure de pivotement (110) fixée de manière pivotante à la plaque de support (34), la jointure de pivotement (110) s'étendant entre l'écrou de réglage (114) et l'outil de coupe (22) de sorte que la rotation de la vis de réglage (116) ait pour fonction de faire pivoter la jointure de pivotement (110) pour faire passer l'outil de coupe (22) de la première à la seconde position.

13. Machine-outil selon la revendication 12,
**caractérisée en ce qu'**elle comprend en outre un élément de sollicitation (112) pour forcer l'outil de coupe (22) dans l'une ou l'autre de la première et de la seconde position.

14. Machine-outil selon la revendication 12, **caractérisée en ce qu'**elle comprend en outre un moyen permettant de résister à la rotation de la vis de réglage (116).

15. Machine-outil selon la revendication 14, **caractérisée en ce que** le moyen de résistance comprend une rondelle (164) fixée à la vis de réglage (116) et un élément de sollicitation (168) pour forcer la rondelle (164) contre ladite plaque de support (34) pour fournir une résistance par frottement à la rotation de la vis de réglage (116).

16. Machine-outil selon l'une quelconque des revendications 4 à 15, **caractérisée en ce que** l'outil de coupe (22) comprend :
■ un carter d'engrenage (30) monté sur la plaque de support (34) ;
■ un moteur (28) fixé à une extrémité du carter d'engrenage (30) ;
■ un arbre (138) fixé de manière rotative à la seconde extrémité du carter d'engrenage (30) ; et
■ un dispositif de coupe (22) rattaché audit arbre (138).

17. Machine-outil selon la revendication 16, **caractérisée en ce que** le carter d'engrenage (30) est sollicité contre une face de la plaque de support (34).

18. Machine-outil selon la revendication 16,
**caractérisée en** outre ce qu'elle comprend :
■ un levier (188) fixé de manière pivotante au carter d'engrenage (30) et pouvant passer d'une première position à une seconde position ;
■ une clé (190) rattachée en pivotement au levier (188), la clé (190) étant adaptée pour venir en prise avec l'arbre (138) pour empêcher sa rotation par rapport au carter d'engrenage (30) lorsque le levier est dans la première position, l'arbre (138) étant libre de tourner lorsque le levier (188) est dans la seconde position.

19. Machine-outil selon la revendication 18, **caractérisée en ce** la table de travail (14) comprend une plaque d'étranglement (18) disposée dans une cavité définie par la table de travail (14) et se prolongeant à travers la surface de travail (16), la plaque d'étranglement (18) définissant l'ouverture (23) dans la table de travail (14), la plaque d'étranglement (18) n'étant pas en mesure de se mettre en place correctement dans la cavité lorsque le levier (188) est dans la première position.

20. Machine-outil selon l'une quelconque des revendications 4 à 19, **caractérisée en ce que** l'outil de coupe (22) est sollicité contre une face de la plaque de support (34).
